# EUROPÄISCHE PATENTSCHRIFT

(11) **EP 2 729 344 B1**
(45) Veröffentlichungstag und Bekanntmachung des Hinweises auf die Patenterteilung: **19.04.2017**
(21) Anmeldenummer: 12733668.3
(22) Anmeldetag: 03.07.2012
(51) Int. Cl.: B62D 5/04, H02P 29/02, H02K 29/08

(54) **ELEKTRONISCH KOMMUTIERTER ELEKTROMOTOR MIT EINER DEFEKTABSCHALTUNG**
ELECTRONICALLY COMMUTATED ELECTRIC MOTOR WITH DEFECT SHUTDOWN
MOTEUR ÉLECTRIQUE À COMMUTATION ÉLECTRONIQUE PRÉSENTANT UNE FONCTION DE DÉCONNEXION EN CAS DE DÉFAUT

(30) Priorität: 05.07.2011 DE 102011078672
(43) Veröffentlichungstag der Anmeldung: 14.05.2014
(73) Patentinhaber: Robert Bosch GmbH, 70442 Stuttgart (DE)
(72) Erfinder: HIRY, Pascal, 71665 Vaihingen/Enz (DE); URBAN, Stephan, 73275 Ohmden (DE)
(86) Internationale Anmeldenummer: PCT/EP2012/062886
(87) Internationale Veröffentlichungsnummer: WO 2013/004684

(56) Entgegenhaltungen:
- WO-A1-03/099632
- WO-A2-2012/160092
- DE-A1-102007 031 268
- DE-A1-102008 034 326
- DE-A1-102010 001 241

## Beschreibung

### Stand der Technik

Die Erfindung betrifft einen elektronisch kommutierten Elektromotor. Der Elektromotor weist einen Stator und einen insbesondere permanentmagnetisch ausgebildeten Rotor auf. Der Elektromotor weist eine ausgangsseitig insbesondere über eine Leistungsendstufe mit dem Stator verbundene Steuereinheit auf, welche ausgebildet ist, den Stator zum Erzeugen eines magnetischen Drehfeldes zu bestromen.

Bei aus dem Stand der Technik bekannten Elektromotoren besteht das Problem, dass im Falle eines Defektes eines Halbleiterschalters eine Leistungsendstufe des Elektromotors der Halbleiterschalter mit dem Defekt niederohmig wird und so eine Statorspule des Stators, welche mit dem Halbleiterschalter verbunden ist, ständig kurzgeschlossen wird. So kann ein Kurzschlussstrom fließen, bei dem der Elektromotor im generatorischen Betrieb betrieben wird. Beim Trennen der Leistungsendstufe, insbesondere des defekten Halbleiterschalters von dem Stator mittels eines Relais kann es zu Funkenbildung kommen. Beim Trennen des defekten Halbleiterschalters vom Stator mittels eines Halbleiterschalters, insbesondere eines MOS-FET-Transistors kann der MOS-FET-Transistor (MOS-FET = Metal-Oxide-Semiconductor-Field-Effect-Transistor) zerstört werden.

Stand der Technik ist z.B. aus DE 10 2010 001 241 A1 bekannt.

### Offenbarung der Erfindung

Bevorzugt weist der Elektromotor eine Leistungsendstufe mit Halbleiterschaltern auf. Die Leistungsendstufe ist über wenigstens einen steuerbar ausgebildeten Trennschalter mit dem Stator verbunden. Die Steuereinheit ist ausgebildet, einen Defekt eines Halbleiterschalters in Abhängigkeit eines durch den Defekt verursachten Bremsmomentes, bevorzugt eine zeitliche Änderung des Bremsmoments auf einen Rotor des Elektromotors zu erfassen, und den Trennschalter zum Trennen des defekten Halbleiterschalters vom Stator zu aktivieren. Mittels der Erfassung des Bremsmomentes kann vorteilhaft der defekte Halbleiterschalter der Leistungsendstufe, welche beispielsweise mehrere Halbleiterschalter aufweist, unter den Halbleiterschaltern detektiert werden. Der so detektierte Halbleiterschalter kann dann mittels des zugehörigen Trennschalters von dem Stator, insbesondere einer Statorspule des Stators, getrennt werden.

Der Elektromotor weist einen mit der Steuereinheit verbundenen Rotorpositionssensor auf. Der Rotorpositionssensor ist ausgebildet, eine Rotorposition des Rotors zu erfassen und ein die Rotorposition repräsentierendes Rotorpositionssignal zu erzeugen. Die Steuereinheit ist bevorzugt ausgebildet, den Stator in Abhängigkeit des Rotorpositionssignals zu bestromen.

Die Steuereinheit ist ausgebildet, das Bremsmoment in Abhängigkeit des Rotorpositionssignals zu erfassen. Weiter ist die Steuereinheit ausgebildet, in Abhängigkeit des Rotorpositionssignals ein Drehzahlsignal zu erzeugen, das eine Drehzahl des Rotors repräsentiert und das Bremsmoment, bevorzugt eine zeitliche Änderung des Bremsmomentes oder wenigstens einen Zeitpunkt einer Änderung des Bremsmoments, in Abhängigkeit einer Frequenzmodulation des Drehzahlsignals zu erfassen. Dadurch kann vorteilhaft ein Sensor eingespart werden, welcher einen defekten Halbleiterschalter erfassen kann. Vorteilhaft kann nämlich so ein Rotorpositionssensor des Elektromotors, welcher ohnehin vorhanden ist, zum Erfassen des defekten Halbleiterschalters der Leistungsendstufe dienen. Die Steuereinheit kann so vorteilhaft aufwandsgünstig mit einer Defekterfassung bereitgestellt werden.

In einer bevorzugten Ausführungsform ist die Steuereinheit mit dem Trennschalter verbunden und ausgebildet, einen Nulldurchgang eines über den defekten Halbleiterschalter fließenden Stromes in Abhängigkeit einer über dem Trennschalter abfallenden Spannung zu erfassen und den Trennschalter im zeitlichen Bereich des Nulldurchgangs zum Trennen zu aktivieren. So kann vorteilhaft im Falle eines Relais eine Funkenbildung vermieden werden. Im Falle eines Halbleiterschalters als Trennschalter, insbesondere eines MOS-FET-Transistors, kann so ein Zerstören des Trennschalters vermieden werden.

In einer bevorzugten Ausführungsform ist die Steuereinheit ausgebildet, einen Nulldurchgang eines Phasenstromes, insbesondere eines im generatorischen Betrieb des Elektromotors über den defekten Halbleiterschalter der Leistungsendstufe fließenden Phasenstromes, in Abhängigkeit des Rotorpositionssignals zu erfassen, und den Trennschalter im zeitlichen Bereich des Nulldurchganges zum Trennen zu aktivieren. So kann der Trennschalter, insbesondere der Halbleiter-Trennschalter vorteilhaft stets funktionsfähig erhalten bleiben. Würde der Halbleiter-Trennschalter nämlich durch den Phasenstrom im generatorischen Betrieb der Phase zerstört und damit niederohmig werden, so würde der Phasenstrom weiter fließen und es stünden keine weiteren Abschaltemittel mehr zur Verfügung, um die Leistungsendstufe von dem Stator zu trennen. Der Elektromotor, welcher beispielsweise ein Elektromotor einer Servolenkung sein kann, würde dann weiterhin einen Bremsmoment während eines Lenkens eines Fahrzeugs mit der Servolenkung erzeugen, was das Lenken des Fahrzeugs nicht unterstützen, sondern vielmehr erschweren würde.

In einer bevorzugten Ausführungsform ist der Trennschalter ein Halbleiterschalter, insbesondere ein Feldeffekttransistor. Die Steuereinheit ist bevorzugt ausgebildet, den Trennschalter in Abhängigkeit einer Stromflussrichtung eines durch den Trennschalter fließenden Stromes zum Trennen zu aktivieren. Die Steuereinheit ist beispielsweise ausgebildet, den Trennschalter bei einer Stromflussrichtung, welcher einer Stromleitung der Bodydiode des Halbleiterschalters entspricht, den Trennschalter bevorzugt ohne eine Rücksichtnahme auf die Phasenlage des Stromes zum Trennen zu aktivieren. Die Steuereinheit ist beispielsweise ausgebildet, den Trennschalter im Falle einer Stromflussrichtung in Sperrrichtung der Bodydiode des Halbleiter-Trennschalters im zeitlichen Bereich eines Nulldurchgangs des Phasenstromes zum Trennen zu aktivieren. So kann das Trennen der Leistungsendstufe von dem Stator mittels des Halbleiter-Trennschalters im Falle eines Lawinendurchbruchs des Halbleiter-Trennschalters nicht zu einer Zerstörung des Trennschalters führen.

Die Erfindung betrifft auch eine Lenkhilfe für ein Kraftfahrzeug, welche einen Elektromotor der vorbeschriebenen Art aufweist. Die Lenkhilfe ist ausgebildet, ein Lenken des Kraftfahrzeugs mittels des Elektromotors zu unterstützen und dazu ein zusätzliches Lenkmoment zu erzeugen.

Die Erfindung betrifft auch ein Verfahren zum Betreiben eines Elektromotors. Bei dem Verfahren wird ein Defekt eines Halbleiterschalters einer mit einem Stator des Elektromotors verbundenen Leistungsendstufe des Elektromotors in Abhängigkeit eines auf einen Rotor des Elektromotors wirkenden Bremsmomentes erfasst und wenigstens der Strompfad des defekten Halbleiterschalters zum Stator in Abhängigkeit des Bremsmomentes elektrisch getrennt, so dass der defekte Halbleiterschalter den Stator nicht mehr bestromen kann.

Bevorzugt werden in Abhängigkeit des Bremsmomentes alle Halbleiterschalter der Leistungsendstufe von dem Stator elektrisch getrennt werden.

Bei dem Verfahren wird eine Rotorposition des Rotors erfasst und ein die Rotorposition repräsentierendes Rotorpositionssignal erzeugt und der Stator in Abhängigkeit des Rotorpositionssignals bestromt, und das Bremsmoment in Abhängigkeit des Rotorpositionssignals erfasst. In Abhängigkeit des Rotorpositionssignals wird ein Drehzahlsignal erzeugt, und das Bremsmoment, nämlich eine zeitliche Änderung des Bremsmomentes, oder wenigstens einen Zeitpunkt einer Änderung des Bremsmoments, in Abhängigkeit einer Frequenzmodulation des Drehzahlsignals erfasst.

Bevorzugt wird bei dem Verfahren ein Nulldurchgang eines über den defekten Halbleiterschalter fließenden Stromes in Abhängigkeit des Bremsmomentes, bevorzugt der Änderung des Bremsmomentes erfasst und der Halbleiterschalter der Leistungsendstufe von dem Stator im zeitlichen Bereich des Nulldurchgangs von dem Stator elektrisch getrennt.

Die Erfindung wird nun im Folgenden anhand von Figuren und weiteren Ausführungsbeispielen erläutert. Weitere vorteilhafte Ausführungsvarianten ergeben sich aus den in den abhängigen Ansprüchen und in den Figuren beschriebenen Merkmalen.

Figur 1 zeigt schematisch ein Ausführungsbeispiel für einen Elektromotor mit einer Leistungsendstufe und einer Steuereinheit, welche ausgebildet ist, einen Defekt eines Halbleiterschalters in Abhängigkeit einer Drehzahlmodulation eines Rotors, verursacht durch ein Bremsmoment, zu erfassen;

Figur 2 zeigt ein Diagramm mit einem durch einen Defekten Halbleiterschalter moduliertem Tachosignal, das eine Drehzahl des in Figur 1 dargestellten Rotors repräsentiert.

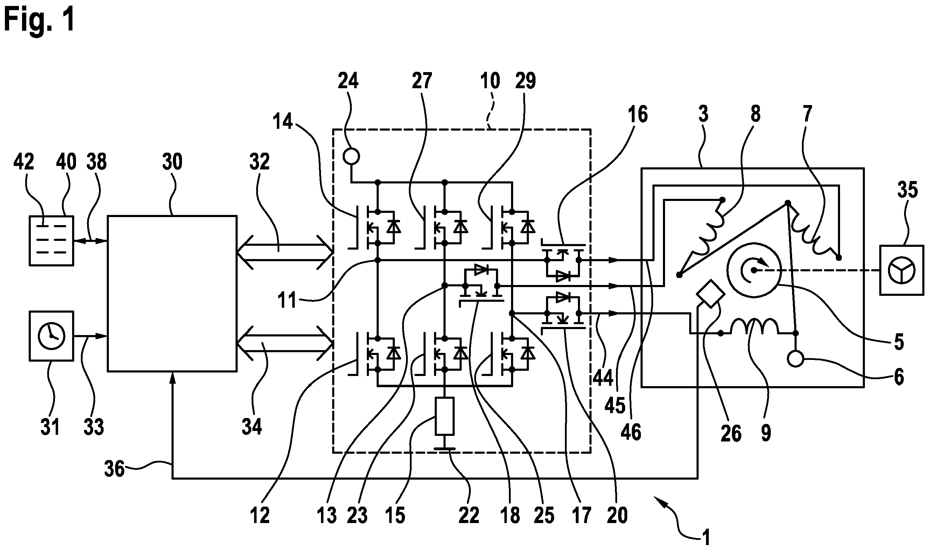

Figur 1 zeigt schematisch ein Ausführungsbeispiel für einen Elektromotor 1. Der Elektromotor 1 weist einen Stator 3 und einen permanentmagnetisch ausgebildeten Rotor 5 auf. Eine Rotorwelle des Rotors 5 ist beispielsweise - gestrichelt gezeichnet - mit einer Servolenkung verbunden. Der Stator 3 weist in diesem Ausführungsbeispiel drei in Sternschaltung geschalteten Statorspulen, nämlich eine Statorspule 7, eine Statorspule 8 und eine Statorspule 9 auf. Die Statorspulen 7, 8 und 9 sind jeweils mit einem ersten Anschluss mit einem gemeinsamen Sternanschluss 6 verbunden.

Der Elektromotor 1 weist auch eine Leistungsendstufe 10 auf. Die Leistungsendstufe 10 ist ausgebildet, die Statorspulen 7, 8 und 9 des Stators 3 zum Erzeugen eines magnetischen Drehfelds zum Drehbewegen des Rotors in Abhängigkeit von eingangsseitig empfangenen Steuersignalen zu bestromen. Dazu ist die Leistungsendstufe 10 über eine mehrkanalige Verbindung 32 mit einer Steuereinheit 30 verbunden. Die Steuereinheit 30 ist beispielsweise durch einen Mikroprozessor oder einen Mikrocontroller, ein FPGA (FPGA = Field-Programmable-Gate-Array) oder ein ASIC (ASIC = Application-Specific-Integrated-Circuit) gebildet. Die Leistungsendstufe 10 weist in diesem Ausführungsbeispiel eine B-6-Brücke auf. Die B-6-Brücke weist sechs MOS-FET-Transistoren (MOS-FET = Metal-Oxide-Semiconductor-Field-Effect-Transistor) auf, von denen zwei miteinander in Serie geschaltete Transistoren 12 und 14 beispielhaft bezeichnet sind. Die Transistoren der Leistungsendstufe 10, insbesondere der B-6-Brücke, weisen jeweils eine in dieser Figur dargestellte Bodydiode auf. Die B-6-Brücke ist mit einem Anschluss 24 mit einer Versorgungsspannung verbunden, und über einen Shunt-Widerstand 15 mit einem Masseanschluss 22 verbunden. Die Steuereinheit 30 ist in diesem Ausführungsbeispiel ausgebildet, die Steuersignale zum Erzeugen des magnetischen Drehfeldes zusätzlich in Abhängigkeit des mittels des Shunt-Widerstands erfassten Motorstromes zu erzeugen.

Die Transistoren der B-6-Brücke weisen jeweils einen Steueranschluss auf, wobei die Steueranschlüsse der Transistoren über die mehrkanalige Verbindung 32 mit der Steuereinheit 30 verbunden sind.

Die Leistungsendstufe 10 weist auch drei Trennschalter auf, welche jeweils als MOS-FET-Transistor ausgebildet sind. Die Statorspule 7 ist über eine Verbindungsleitung 46 und weiter über einen steuerbar ausgebildeten Trennschalter 16 mit dem Transistorpaar umfassend die Transistoren 12 und 14 der B-6-Brücke verbunden. Der Transistor 14 bildet dabei einen High-Side-Transistor, und der Transistor 12 bildet dabei einen Low-Side-Transistor. Die Statorspule 8 ist über eine Verbindungsleitung 45 und weiter über einen steuerbar ausgebildeten Trennschalter 18 mit einem weiteren Ausgang für eine weitere Phase der B-6-Brücke verbunden. Der Trennschalter 18 ist mit einem Verbindungsknoten 13 verbunden, der einen Ausgang eines Phasenschalters umfassend zwei seriell miteinander verbundene MOS-FET-Transistoren 23 und 27 umfasst. Die Statorspule 9 ist über eine Verbindungsleitung 44 und weiter über einen steuerbar ausgebildeten Trennschalter 20 mit einem Ausgang für die Statorspule 9 der B-6-Brücke verbunden. Der Trennschalter 20 ist mit einem Verbindungsknoten 17 verbunden, der den Ausgang eines Phasenschalters umfassend zwei seriell miteinander verbundene MOS-FET-Transistoren 25 und 29 umfasst. Die steuerbar ausgebildeten Trennschalter 16, 18 und 20 sind in diesem Ausführungsbeispiel als MOS-FET-Transistoren ausgebildet. Steueranschlüsse der Transistoren 16, 18 und 20 sind über die mehrkanalige Verbindung 34 mit der Steuereinheit 30 verbunden.

Der Elektromotor 1 weist auch einen Rotorpositionssensor 26 auf, welcher beispielsweise wenigstens einen Hall-Sensor umfasst. Denkbar ist auch ein GMR-Sensor (GMR = Giant-Magneto-Resistive) oder ein AMR-Sensor (AMR = Anisotrope-Magneto-Resistive). Die Steuereinheit 30 ist eingangsseitig über eine Verbindungsleitung 36 mit dem Rotorpositionssensor 26 verbunden. Der Rotorpositionssensor 26 ist ausgebildet, eine Rotorposition des Rotors 5 zu erfassen und ein die Rotorposition repräsentierendes Rotorpositionssignal zu erzeugen und dieses an die Steuereinheit 30 zu senden. Die Steuereinheit 30 ist ausgebildet, in Abhängigkeit des Rotorpositionssignals Steuersignale zum Ansteuern der Leistungsendstufe, insbesondere der Steueranschlüsse der B-6-Brücke zum Erzeugen eines magnetischen Drehfelds zum Drehbewegen des Rotors 5 zu erzeugen.

Die Steuereinheit 30 ist ausgebildet, in Abhängigkeit eines Signalmusters des Rotorpositionssignals, insbesondere wenigstens einer Frequenzkomponente des Rotorpositionssignals, ein Bremsmoment des Rotors zu erfassen, welches durch einen defekten Halbleiterschalter der Leistungsendstufe 10, insbesondere der B-6-Brücke erzeugt worden ist. Die Steuereinheit 30 ist dazu über eine bidirektionale Verbindung 38 mit einem Speicher 40 für eine Look-Up-Tabelle verbunden. Der Speicher 40 weist Datensätze auf, welche zusammen eine Look-Up-Tabelle bilden. Der Datensatz 42 ist beispielhaft bezeichnet. Die Look-Up-Tabelle im Speicher 40 repräsentiert in diesem Ausbildungsbeispiel eine Zuordnung zwischen Rotorpositionen des Rotors 5, erfasst durch den Rotorpositionssensor 26, und Halbleiterschaltern der B-6-Brücke der Leistungsendstufe 10. Die Steuereinheit 30 ist weiter ausgebildet, über die Verbindung 38 Datensätze, welche die Look-Up-Tabelle repräsentieren, aus dem Speicher 40 auszulesen und die Datensätze, welche eine vorbestimmte Rotorposition repräsentieren, mit dem Rotorpositionssignal zu vergleichen. Die Steuereinheit 30 ist weiter ausgebildet, einen Halbleiterschalter in Abhängigkeit des Rotorpositionssignals und weiter in Abhängigkeit eines Vergleichsergebnisses eines Vergleichs mittels der Look-Up-Tabelle wenigstens einen defekten Halbleiterschalter der Leistungsendstufe zu ermitteln. Die Steuereinheit 30 ist weiter ausgebildet, in Abhängigkeit des ermittelten defekten Halbleiterschalters wenigstens einen Trennschalter oder alle Trennschalter 16, 18 und 20 über die mehrkanalige Verbindung 34 anzusteuern und so den Stator 3 von der Leistungsendstufe 10 zu trennen.

Die Steuereinheit 30 ist in diesem Ausführungsbeispiel ausgebildet, den wenigstens einen Trennschalter in Abhängigkeit des Rotorpositionssignals und somit in Abhängigkeit der Rotorposition im zeitlichen Bereich eines Nulldurchgangs eines von einer Statorspule generatorisch erzeugten und über den defekten Halbleiterschalter fließenden Stromes zum Trennen zu aktivieren. Dazu ist die Steuereinheit 30 ausgebildet, aus dem Rotorpositionssignal in Abhängigkeit eines Zeitsignals ein Drehzahlsignal zu erzeugen, das eine Drehzahl des Rotors repräsentiert und eine Frequenzmodulation eines Drehzahlsignals zu erfassen. Dazu ist die Steuereinheit 30 über eine Verbindungsleitung 33 mit einem Zeitgeber 31, verbunden, welcher ausgebildet ist, ein Zeitsignal als Zeitbasis zum Ermitteln des Drehzahlsignals zu erzeugen. Der Zeitgeber ist beispielsweise durch einen Schwingquarz gebildet.

Wenn beispielsweise der High-Side-Transistor 14 defekt ist und damit niederohmig leitend ist, so fließt ein Fehlerstrom vom Versorgungsspannungsanschluss 24 über den Senkenanschluss des Transistors 14, dessen Schaltstrecke und über den Quellenanschluss des Transistors 14, weiter über einen Verbindungsknoten 11, welcher einen Ausgang des Phasenschalters der Statorspule 7 bildet und weiter über den Trennschalter 16 und über die Verbindungsleitung 46 zu dem zweiten Anschluss der Statorspule 7. Der Quellenanschluss des Halbleiter-Trennschalters 16 ist in diesem Ausführungsbeispiel mit dem Verbindungsknoten 11 verbunden, der Senkenanschluss ist mit der Verbindungsleitung 46 verbunden. Daher fließt der Fehlerstrom in Richtung der Bodydiode des in diesem Ausführungsbeispiel als MOS-FET-Transistor ausgebildeten Trennschalters 16, wenn der Trennschalter geöffnet wird. Der Fehlerstrom fließt über den Sternanschluss 6 und über die Statorspulen 9 und 8 zurück über die Verbindungsleitungen 45 und 44 und somit auch über die Trennschalter 20 und 18 über den High-Side-Transistor 27 beziehungsweise den High-Side-Transistor 29 der B-6-Brücke, und dort in Durchflussrichtung der jeweiligen Bodydiode, zurück zum defekten Halbleiterschalter 14.

Die Steuereinheit 30 ist ausgebildet, in Abhängigkeit eines Defekts des Halbleiterschalters 14, welcher in Abhängigkeit des Rotorpositionssignals ermittelt wurde, ein Steuersignal zum Trennen der mit dem Halbleiterschalter 14 verbundenen Statorspule 7 an den Trennschalter 16 zu senden. Die Steuereinheit ist beispielsweise ausgebildet, im Falle eines defekten Transistors die Trennschalter der Leistungsendstufe 10 zu einer Rotorlage des Rotors 5 gemäß der folgenden Tabelle zu aktivieren:

| Fehler in | Phase 1 Spule 7 | Phase 2 Spule 8 | Phase 3 Spule 9 |
|---|---|---|---|
| High-Side | 180°-240° | 300°-360° | 60°-120° |
| | | | |
| Low-Side | 0°-60° | 120°-180° | 240°-300° |
| | | | |

Da der Fehlerstrom wie im vorangehenden Beispiel des defekten High-Side-Transistors 14 erläutert, beim Trennen in Richtung der Bodydiode des Trennschalters 16 fließt, kann der Trennschalter 16 während eines Zeitpunktes einer Periode des Fehlerstromes gemäß obenstehender Tabelle getrennt werden. Vorteilhaft kann ein Trennen durch die Steuereinheit 30 zu einem Nulldurchgang des Fehlerstroms erfolgen, sodass der Fehlerstrom, welcher durch die Trennschalter 18 und 20 unter dort in Sperrrichtung der jeweiligen Bodydiode fließt, diese nicht während eines Lawinendurchbruchs, auch Avalanche-Durchbruch genannt, zerstören kann.

Bei einem defekten Low-Side-Transistor, beispielsweise dem Halbleiterschalter 12, fließt der Fehlerstrom, welcher in der Statorspule 7 induziert wird, von der Statorspule 7 über die Verbindungsleitung 46 in Sperrrichtung der Bodydiode des Trennschalters 16 durch den Trennschalter 16, weiter über den Verbindungsknoten 11 zum Senkenanschluss des Halbleiterschalters 12, durch den defekten Halbleiterschalter 12 zum Quellenanschluss des Halbleiterschalters 12 und weiter über die weiteren Low-Side-Transistoren 23 und 25 der B-6-Brücke zurück zum Sternanschluss 6, welcher mit dem ersten Anschluss der Statorspule 7 verbunden ist. Dabei fließt der Fehlerstrom vom Quellenanschluss des Halbleiterschalters 12 über einen Low-Side-Transistor 13 der Low-Side-Transistoren 23 und 25 der B-6-Brücke zu einem Verbindungsknoten 13, welcher mit einem Quellenanschluss des Trennschalters 18 verbunden ist, über den Trennschalter 18 und weiter über die Verbindungsleitung 45 über die Statorspule 8 zurück zum Sternanschluss 6. Der Fehlerstrom fließt parallel dazu vom Quellenanschluss des Halbleiterschalters 12 über einen Low-Side-Halbleiterschalter 25 der bereits vorab erwähnten weiteren Halbleiterschalter und über einen Verbindungsknoten 17, weiter über den Trennschalter 20 und über die Verbindungsleitung 44 über die Statorspule 9 zum Sternanschluss 6. Die Fehlerströme in den Trennschaltern 18 und 20 fließen dabei in Richtung der Bodydiode der Trennschalter 18 und 20, der Fehlerstrom durch den Trennschalter 16 fließt dabei in Sperrrichtung der Bodydiode des Trennschalters 16 beim Trennen des Trennschalters 16 in den Lawinendurchbruch geraten und dabei zerstört werden.

Die Schaltstrecke des Trennschalters 16 wäre dann niederohmig verbunden, sodass der Trennschalter 16 die Statorspule 7 nicht mehr von der Leistungsendstufe 10 trennen kann. Die Steuereinheit 30 ist in diesem Ausführungsbeispiel ausgebildet, im Falle des defekten Low-Side-Transistors 12 den Trennschalter 16 im Bereich eines Nulldurchgangs des durch den Trennschalter 16 fließenden Fehlerstroms zum Trennen zu aktivieren.

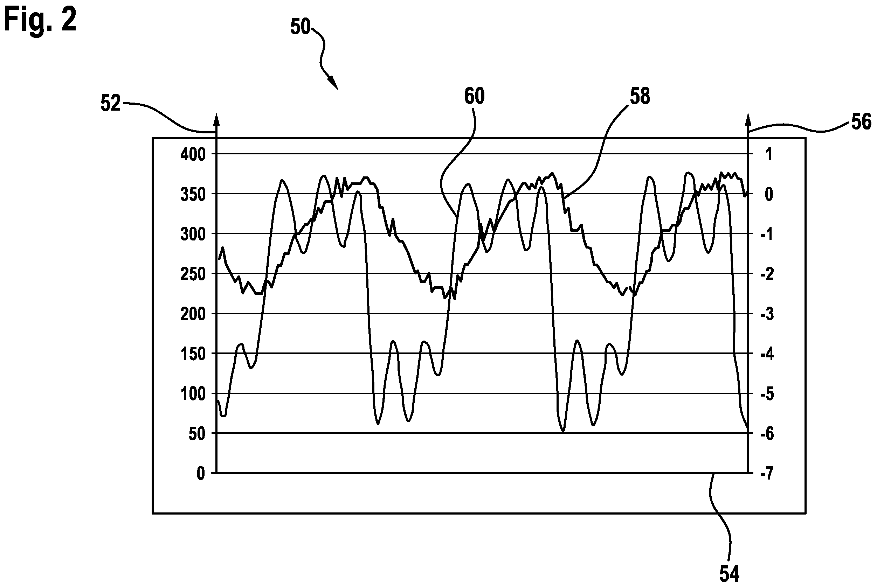

Figur 2 zeigt ein Diagramm 50. Das Diagramm 50 weist eine Abszisse 54 und eine Ordinate 52 auf. Die Abszisse 54 repräsentiert einen Zeitverlauf, die Ordinate 52 repräsentiert eine Drehzahl des in Figur 1 dargestellten Rotors des Elektromotors 1 in Umdrehungen pro Minute. Dargestellt ist auch eine Kurve 58, welche von Rotorpositionssensor 26 erfasste Rotorpositionssignale repräsentiert. Dargestellt ist auch eine Kurve 60, welche ein Bremsmoment repräsentiert, welches an einer Rotorwelle des Rotors 5 in Figur 1 abgegeben werden kann. Eine weitere Ordinate 56 repräsentiert einen Betrag des Bremsmoments der Kurve 60. Die Kurven 58 und 60 basieren jeweils auf einer Messung, daher repräsentieren die Kurven 58 und 60 zusätzlich zu den repräsentierten Großsignalen weitere Signalanteile, welche die Kurvenform der Kurven 58 und 60 beeinflussen. Die in Figur 1 dargestellte Steuereinheit ist ausgebildet, - mittels eines Signalanalysators - das von dem Elektromotor 1, und dem mittels der Kurve 60 repräsentierte Bremsmoment in Abhängigkeit einer Frequenzmodulation des Drehzahlsignals, repräsentiert durch die Kurve 58, zu erfassen. Die Steuereinheit 30 in Figur 1 ist beispielsweise ausgebildet, in Abhängigkeit des Rotorpositionssignals das Drehzahlsignal zu erzeugen, welches die Drehzahl des Rotors 5 repräsentiert. Die Kurven 58 und 60 im Diagramm 50 zeigen, dass während eines Abfalls der Rotordrehzahl ein Drehmoment an der Rotorwelle abnimmt, und somit ein Bremsmoment an der Rotorwelle zunimmt.

## Patentansprüche

1. Elektronisch kommutierter Elektromotor (1),
mit einem Stator (3) und einem insbesondere permanentmagnetisch ausgebildeten Rotor (5),
wobei der Elektromotor (1) eine ausgangsseitig mit dem Stator (3) verbundene Steuereinheit (30) aufweist, welche ausgebildet ist, den Stator zum Erzeugen eines magnetischen Drehfeldes zu bestromen,
**dadurch gekennzeichnet, dass**
der Elektromotor (1) eine Leistungsendstufe (10) mit Halbleiterschaltern (12, 14, 23, 25, 27, 29) aufweist, welche über wenigstens einen steuerbar ausgebildeten Trennschalter (16, 18, 20) mit dem Stator (10) verbunden ist, und die Steuereinheit (30) ausgebildet ist, einen Defekt eines Halbleiterschalters (12, 14, 23, 25, 27, 29) in Abhängigkeit eines durch den Defekt verursachten Bremsmomentes auf den Rotor (5) zu erfassen und den Trennschalter (16, 18, 20) im Strompfad des defekten Halbleiterschalters (12, 14, 23, 25, 27, 29) zum Trennen des Halbleiterschalters (12, 14, 23, 25, 27, 29) von dem Stator (10) zu aktivieren, und der Elektromotor (1) einen mit der Steuereinheit (30) verbundenen Rotorpositionssensor (26) aufweist, welcher ausgebildet ist, eine Rotorposition des Rotors (5) zu erfassen und ein die Rotorposition repräsentierendes Rotorpositionssignal zu erzeugen, wobei die Steuereinheit (30) einen Signalanalysator aufweist und ausgebildet ist, in Abhängigkeit des Rotorpositionssignals ein Drehzahlsignal zu erzeugen, das eine Drehzahl des Rotors (5) repräsentiert und das Bremsmoment, nämlich eine zeitliche Änderung des Bremsmomentes oder wenigstens einen Zeitpunkt einer Änderung des Bremsmoments, in Abhängigkeit einer Frequenzmodulation des Drehzahlsignals mittels des Signalanalysators zu erfassen.

2. Elektromotor (1) nach Anspruch 1,
**dadurch gekennzeichnet, dass**
die Steuereinheit (30) mit dem Trennschalter (16, 18, 20) verbunden und ausgebildet ist, einen Nulldurchgang eines über den defekten Halbleiterschalter (12, 14, 23, 25, 27, 29) fließenden Stromes in Abhängigkeit einer über dem Trennschalter abfallenden Spannung zu erfassen und den Trennschalter (16, 18, 20) im zeitlichen Bereich des Nulldurchganges zum Trennen zu aktivieren.

3. Elektromotor (1) nach einem der vorhergehenden Ansprüche,
**dadurch gekennzeichnet, dass**
die Steuereinheit (30) ausgebildet ist, einen Nulldurchgang eines über den defekten Halbleiterschalter (12, 14, 23, 25, 27, 29) fließenden Stromes in Abhängigkeit des Rotorpositionssignals zu erfassen und den Trennschalter im zeitlichen Bereich des Nulldurchganges zum Trennen zu aktivieren.

4. Elektromotor (1) nach einem der vorhergehenden Ansprüche 2 oder 3,
**dadurch gekennzeichnet, dass**
der Trennschalter (16, 18, 20) ein Halbleiterschalter (12, 14, 23, 25, 27, 29), nämlich ein Feldeffekttransistor ist und die Steuereinheit (30) ausgebildet ist, den Trennschalter (16, 18, 20) in Abhängigkeit einer Stromflussrichtung eines durch den Trennschalter (16, 18, 20) fließenden Stromes zum Trennen zu aktivieren, wobei
die Steuereinheit (30) ausgebildet ist, den Trennschalter (16, 18, 20) bei einer Stromflussrichtung, welcher einer Stromleitung der Bodydiode des Halbleiterschalters (12, 14, 23, 25, 27, 29) entspricht, den Trennschalter ohne eine Rücksichtnahme auf die Phasenlage des Stromes zum Trennen zu aktivieren, und den Trennschalter (16, 18, 20) im Falle einer Stromflussrichtung in Sperrrichtung der Bodydiode des Halbleiter-Trennschalters im zeitlichen Bereich eines Nulldurchgangs des Phasenstromes zum Trennen zu aktivieren.

5. Lenkhilfe (1, 35) für ein Kraftfahrzeug mit einem Elektromotor (1) nach einem der vorhergehenden Ansprüche.

6. Verfahren zum Betreiben eines Elektromotors (1),
bei dem ein Defekt eines Halbleiterschalters (12, 14, 23, 25, 27, 29) einer mit einem Stator (3) des Elektromotors (1) verbundenen Leistungsendstufe (10) des Elektromotors (1) in Abhängigkeit einer zeitlichen Änderung eines auf einen Rotor (5) des Elektromotors (1) wirkenden Bremsmomentes (60) erfasst wird und wenigstens der Strompfad des defekten Halbleiterschalters zum Stator in Abhängigkeit des Bremsmomentes elektrisch getrennt wird, so dass der defekte Halbleiterschalter den Stator nicht mehr bestromen kann, wobei bei dem Verfahren eine Rotorposition des Rotors (5) erfasst wird und ein die Rotorposition repräsentierendes Rotorpositionssignal erzeugt wird und der Stator (3) in Abhängigkeit des Rotorpositionssignals bestromt wird, und eine zeitliche Änderung des Bremsmoments in Abhängigkeit des Rotorpositionssignals erfasst wird, und in Abhängigkeit des Rotorpositionssignals ein Drehzahlsignal erzeugt wird, das eine Drehzahl des Rotors (5) repräsentiert und das Bremsmoment, nämlich eine zeitliche Änderung des Bremsmomentes oder wenigstens einen Zeitpunkt einer Änderung des Bremsmoments, in Abhängigkeit einer Frequenzmodulation des Drehzahlsignals erfasst wird. (Anspr 9, S2 Z16-23)

7. Verfahren nach Anspruch 6,
bei dem in Abhängigkeit des Bremsmomentes alle Halbleiterschalter der Leistungsendstufe von dem Stator elektrisch getrennt werden.

8. Verfahren nach einem der Ansprüche 6 oder 7,
bei dem ein Nulldurchgang eines über den defekten Halbleiterschalter fließenden Stromes in Abhängigkeit der zeitlichen Änderung des Bremsmoments erfasst wird und der Halbleiterschalter (12, 14, 23, 25, 27, 29) der Leistungsendstufe (10) von dem Stator (3) im zeitlichen Bereich des Nulldurchgangs von dem Stator (3) elektrisch getrennt wird.

9. Verfahren nach Anspruch 8, bei dem der Trennschalter (16, 18, 20) bei einer Stromflussrichtung, welcher einer Stromleitung der Bodydiode des Halbleiterschalters (12, 14, 23, 25, 27, 29) entspricht, ohne eine Rücksichtnahme auf die Phasenlage des Stromes zum Trennen zu aktiviert wird, und der Trennschalter (16, 18, 20) im Falle einer Stromflussrichtung in Sperrrichtung der Bodydiode des Halbleiter-Trennschalters im zeitlichen Bereich eines Nulldurchgangs des Phasenstromes zum Trennen aktiviert wird.

## Claims

1. Electronically commutated electric motor (1),
having a stator (3) and a rotor (5), in particular a permanent magnet rotor,
wherein the electric motor (1) comprises a control unit (30) that is connected on the output side to the stator (3) and is designed so as to energize the stator in order to generate a rotating magnetic field,
**characterized in that**
the electric motor (1) comprises a power output stage (10) having semiconductor switches (12, 14, 23, 25, 27, 29), which power output stage is connected to the stator (10) by way of at least one controllable disconnecting switch (16, 18, 20), and the control unit (30) is designed so as to detect a defect of a semiconductor switch (12, 14, 23, 25, 27, 29) in dependence upon a braking torque that is caused at the rotor (5) as a result of the defect and to activate the disconnecting switch (16, 18, 20) in the current path of the defective semiconductor switch (12, 14, 23, 25, 27, 29) in order to disconnect the semiconductor switch (12, 14, 23, 25, 27, 29) from the stator (10), and the electric motor (1) comprises a rotor position sensor (26) that is connected to the control unit (30) and is designed so as to ascertain a rotor position of the rotor (5) and to generate a rotor position signal that represents the rotor position, wherein the control unit (30) has a signal analyser and is designed so as to generate, in dependence upon the rotor position signal, a rotational speed signal that represents a rotational speed of the rotor (5), and to ascertain, in dependence upon a frequency modulation of the rotational speed signal, the braking torque, namely a change-over time of the braking torque or at least a point in time when the braking torque changes, by means of the signal analyser.

2. Electric motor (1) according to Claim 1,
**characterized in that**
the control unit (30) is connected to the disconnecting switch (16, 18, 20) and is designed so as, in dependence upon a voltage drop that occurs across the disconnecting switch, to ascertain a zero-crossing point of a current that is flowing through the defective semiconductor switch (12, 14, 23, 25, 27, 29) and to activate the disconnecting switch (16, 18, 20) into its disconnected mode in the time region of the zero-crossing point.

3. Electric motor (1) according to either of the preceding claims,
**characterized in that**
the control unit (30) is designed so as, in dependence upon the rotor position signal, to ascertain a zero-crossing point of a current that is flowing through the defective semiconductor switch (12, 14, 23, 25, 27, 29) and to activate the disconnecting switch into its disconnected mode in the time region of the zero-crossing point.

4. Electric motor (1) according to either of the preceding Claims 2 and 3,
**characterized in that**
the disconnecting switch (16, 18, 20) is a semiconductor switch (12, 14, 23, 25, 27, 29), namely a field effect transistor, and the control unit (30) is designed so as, in dependence upon a current flow direction of a current that is flowing through the disconnecting switch (16, 18, 20), to activate the disconnecting switch (16, 18, 20) into its disconnected mode, wherein
the control unit (30) is designed so as to activate the disconnecting switch (16, 18, 20) the disconnecting switch into its disconnected mode, without taking into consideration the phase condition of the current, in the case of a current flow direction that corresponds to a current conduction of the body diode of the semiconductor switch (12, 14, 23, 25, 27, 29), and so as to activate the disconnecting switch (16, 18, 20) into its disconnected mode in the case of a current flow direction in the reverse direction of the body diode of the semiconductor disconnecting switch in the time region of a zero-crossing point of the phase current.

5. Steering aid (1, 35) for a motor vehicle having an electric motor (1) according to any one of the preceding claims.

6. Method for operating an electric motor (1),
in which method a defect of a semiconductor switch (12, 14, 23, 25, 27, 29) of a power output stage (10) of the electric motor (1), which power output stage is connected to a stator (3) of the electric motor (1), is ascertained in dependence upon a change-over time of a braking torque (60) that is acting on a rotor (5) of the electric motor (1), and at least the current path of the defective semiconductor switch to the stator is electrically disconnected in dependence upon the braking torque, so that the defective semiconductor switch can no longer energize the stator, wherein a rotor position of the rotor (5) is ascertained in the method and a rotor position signal that represents the rotor position is generated and the stator (3) is energized in dependence upon the rotor position signal, and a change-over time of the braking torque is ascertained in dependence upon the rotor position signal, and a rotational speed signal that represents a rotational speed of the rotor (5) is generated in dependence upon the rotor position signal, and the braking torque, namely a change-over time of the braking torque or at least a point in time when the braking torque changes, is ascertained in dependence upon a frequency modulation of the rotational speed signal. (Claim 9, page 2, lines 16-23)

7. Method according to Claim 6,
in which, in dependence upon the braking torque, all the semiconductor switches of the power output stage are electrically disconnected from the stator.

8. Method according to either of Claims 6 and 7,
in which a zero-crossing point of a current that is flowing through the defective semiconductor switch is ascertained in dependence upon the change-over time of the braking torque and the semiconductor switch (12, 14, 23, 25, 27, 29) of the power output stage (10) is electrically disconnected from the stator (3) in the time region of the zero-crossing point from the stator (3).

9. Method according to Claim 8, in which method the disconnecting switch (16, 18, 20) is activated into its disconnected mode, without taking into consideration the phase condition of the current, in the case of a current flow direction that corresponds to a current conduction of the body diode of the semiconductor switch (12, 14, 23, 25, 27, 29), and the disconnecting switch (16, 18, 20) is activated into its disconnected mode in the case of a current flow direction in the reverse direction of the body diode of the semiconductor disconnecting switch in the time region of a zero-crossing point of the phase current.

## Revendications

1. Moteur électrique (1) à commutation électronique,
comportant un stator (3) et un rotor (5) notamment réalisés de façon à comporter un aimant permanent,
dans lequel le moteur électrique (1) comprend une unité de commande (30) raccordée côté sortie au stator (3), conçu pour alimenter le stator en courant afin de générer un champ magnétique tournant,
**caractérisé en ce que** le moteur électrique (1) comprend un étage de puissance (10) pourvu de commutateurs à semi-conducteurs (12, 14, 23, 25, 27, 29), qui est relié au stator (10) par l'intermédiaire d'au moins un sectionneur (16, 18, 20) réalisé de manière à pouvoir être commandé, et **en ce que** l'unité de commande (30) est réalisée de manière à détecter un défaut d'un commutateur à semi-conducteur (12, 14, 23, 25, 27, 29) en fonction d'un couple de freinage induit par ledit défaut sur le rotor (5) et pour activer le sectionneur (16, 18, 20) sur le trajet de courant du commutateur à semi-conducteur défectueux (12, 14, 23, 25, 27, 29) afin de séparer le commutateur à semi-conducteur défectueux (12, 14, 23, 25, 27, 29) du stator (10), et le moteur électrique (1) comprend un capteur de position de rotor (26) relié à l'unité de commande (30), qui est réalisé de manière à détecter une position de rotor dudit rotor (5) et pour générer un signal de position de rotor représentant la position du rotor, dans lequel l'unité de commande (30) comprend un analyseur de signal et est réalisée de manière à générer, en fonction du signal de position de rotor, un signal de vitesse de rotation qui représente la vitesse de rotation du rotor (5), et à détecter au moyen de l'analyseur de signal le couple de freinage, à savoir une variation temporelle du couple de freinage ou au moins un instant où il se produit une variation du couple de freinage, en fonction d'une fréquence de modulation du signal de vitesse de rotation.

2. Moteur électrique (1) selon la revendication 1, **caractérisé en ce que** l'unité de commande (30) est reliée au sectionneur (16, 18, 20) et est réalisée de manière à détecter le passage à zéro d'un courant passant dans le commutateur à semi-conducteur défectueux (12, 14, 23, 25, 27, 29) en fonction d'une chute de tension aux bornes du sectionneur et pour activer le sectionneur (16, 18, 20) dans la plage temporelle du passage à zéro afin de provoquer la séparation.

3. Moteur électrique (1) selon l'une quelconque des revendications précédentes,
**caractérisé en ce que** l'unité de commande (30) est réalisée de manière à détecter un passage à zéro d'un courant passant à travers le commutateur à semi-conducteur défectueux (12, 14, 23, 25, 27, 29) en fonction du signal de position de rotor et à activer le sectionneur dans la plage temporelle du passage à zéro afin de provoquer la séparation.

4. Moteur électrique (1) selon l'une quelconque des revendications 2 ou 3 précédentes,
**caractérisé en ce que** le sectionneur (16, 18, 20) est un commutateur à semi-conducteur (12, 14, 23, 25, 27, 29), à savoir un transistor à effet de champ, et **en ce que** l'unité de commande (30) est réalisée de manière à activer le sectionneur (16, 18, 20) en fonction d'un sens de passage du courant d'un courant passant à travers le sectionneur (16, 18, 20) afin de provoquer la séparation, dans lequel
l'unité de commande (30) est réalisée de manière à activer le sectionneur (16, 18, 20) le sectionneur lors du passage d'un courant qui correspond à une ligne de courant de la diode intrinsèque du commutateur à semi-conducteur (12, 14, 23, 25, 27, 29), afin de provoquer la séparation, sans rétroaction sur la position de phase du courant, et pour activer le sectionneur (16, 18, 20) dans le cas où le courant passe dans la direction de blocage de la diode intrinsèque du sectionneur à semi-conducteur dans la plage temporelle d'un passage à zéro du courant de phase afin de provoquer la séparation.

5. Direction assistée (1, 35) destinée à un véhicule automobile comportant un moteur électrique (1) selon l'une quelconque des revendications précédentes.

6. Procédé de mise en fonctionnement d'un moteur électrique (1),
dans lequel un défaut d'un commutateur à semi-conducteur (12, 14, 23, 25, 27, 29) d'un étage de puissance (10) du moteur électrique (1) relié à un stator (3) du moteur électrique (1) est détecté en fonction d'une variation temporelle d'un couple de freinage (60) agissant sur un rotor (5) du moteur électrique (1) et dans lequel au moins le trajet de courant du commutateur à semi-conducteur défectueux vers le stator est électriquement séparé en fonction du couple de freinage de manière à ce que le commutateur à semi-conducteur défectueux ne puisse plus alimenter le stator en courant, dans lequel, conformément au procédé, une position de rotor du rotor (5) est détectée et un signal de position de rotor représentant la position du rotor est généré et le stator (3) est alimenté en courant en fonction du signal de position de rotor, et une variation temporelle du couple de freinage est détectée en fonction du signal de position de rotor, et un signal de vitesse de rotation est généré en fonction du signal de position de rotor, ledit signal représentant la vitesse de rotation du rotor (5), et le couple de freinage, à savoir une variation temporelle du couple de freinage ou au moins un instant où il se produit une variation du couple de freinage, est détecté en fonction d'une fréquence de modulation du signal de vitesse de rotation. (Cl. 9, p. 2, 1. 16-23)

7. Procédé selon la revendication 6,
dans lequel tous les commutateurs à semi-conducteur de l'étage de puissance sont électriquement séparés du stator en fonction du couple de freinage.

8. Procédé selon l'un quelconque des revendications 6 ou 7,
dans lequel un passage à zéro d'un courant passant à travers le commutateur à semi-conducteur défectueux est détecté en fonction de la variation temporelle du couple de freinage et le commutateur à semi-conducteur (12, 14, 23, 25, 27, 29) de l'étage de puissance (10) du stator (3) est électriquement séparé du stator (3) dans la plage temporelle du passage à zéro.

9. Procédé selon la revendication 8, dans lequel le sectionneur (16, 18, 20) est activé pour une direction de passage du courant qui correspond à une ligne de courant de la diode intrinsèque du commutateur à semi-conducteur (12, 14, 23, 25, 27, 29) sans prendre en compte la position de phase du courant et le sectionneur (16, 18, 20) est activé, dans le cas où le courant passe dans la direction de blocage de la diode intrinsèque du sectionneur à semi-conducteur dans la plage temporelle d'un passages à zéro du courant de phase, afin de provoquer la séparation.
